# EUROPÄISCHE PATENTSCHRIFT

(11) **EP 1 358 462 B1**
(45) Veröffentlichungstag und Bekanntmachung des Hinweises auf die Patenterteilung: **24.08.2005**
(21) Anmeldenummer: 02708218.9
(22) Anmeldetag: 07.02.2002
(51) Int. Cl.: G01N 1/06

(54) **MIKROTOM**
MICROTOME
MICROTOME

(30) Priorität: 09.02.2001 DE 10106033
(43) Veröffentlichungstag der Anmeldung: 05.11.2003
(73) Patentinhaber: Hess Consult GMBH, 69181 Leimen (DE)
(72) Erfinder: HESS, Hans-Jürgen, 69181 Leimen (DE)
(74) Vertreter: Köhler, Walter
(86) Internationale Anmeldenummer: PCT/DE2002/000438
(87) Internationale Veröffentlichungsnummer: WO 2002/065095

(56) Entgegenhaltungen:
- DE-A- 3 127 266
- DE-A- 4 307 750
- DE-A- 19 911 005
- DE-C- 19 911 163
- DE-U- 8 129 032
- US-A- 4 479 402

## Beschreibung

Die Erfindung betrifft ein Mikrotom mit einer Messerhalteeinrichtung und mit einer Objekthalteeinrichtung, wobei die Objekthalteeinrichtung zur Durchführung einer Schneidbewegung eine erste Antriebseinrichtung und die Objekthalteeinrichtung bzw. die Messerhalteeinrichtung zur Durchführung einer Zustellbewegung eine zweite Antriebseinrichtung aufweist.

Derartige Mikrotome sind in verschiedenen Ausbildungen an sich bekannt. Beispielsweise ist aus dem Prospekt "The MICROM HM 350 S" der Fa. MICROM International, 69190 Walldorf, ein Mikrotom bekannt, bei dem auf ein Handrad zum manuellen Auf- und Abwärtsbewegen der Objekthalteeinrichtung, d.h. zur manuellen Durchführung einer Schneidbewegung, verzichtet werden kann. Das besagte Handrad wird durch ein Bedienelement ersetzt, bei dem es sich beispielsweise um einen Drehknopf handelt. Der Drehknopf steuert über einen Inkrementalgeber den dem Drehknopf entsprechenden Bewegungsablauf der Objekthalteeinrichtung. Der Drehknopf simuliert bei diesem bekannten Rotationsmikrotom also die vertikale Schneidbewegung, d.h. die vertikale Auf- und Abwärtsbewegung der Objekthalteeinrichtung in bezug auf ein Grundgestell des Mikrotoms.

Aus der DE 199 11 163 C1 ist ein Mikrotom bekannt, bei dem der Schneidvorgang durch eine Relativbewegung zwischen einem Schneidmesser und einem Objekt durchgeführt wird. Zur Erzeugung dieser Relativbewegung ist ein Antrieb mit einem Antriebsmotor, einer Steuerschaltung und einem Handrad vorgesehen. Das Handrad ist mit einen Encoder verbunden, der beim Drehen des Handrades entsprechende Signale an die Steuerschaltung abgibt. Über diese Steuerschaltung wird der Antriebsmotor dann entsprechend angesteuert. Beim Fehlen von Encodersignalen wird der Antrieb blockiert. Dieses bekannte Mikrotom weist also ein Handrad auf, das bei einer Drehung über einen Encoder Signale an die Steuerschaltung abgibt. Das Handrad ist also zur Durchführung eines dem Standardmodus des erfindungsgemäßen Mikrotoms entsprechenden Betriebsmodus geeignet. Dort wird jedoch das Handrad betätigt und nicht ein Bedienelement; dieses Mikrotom weist außerdem auch noch einen zweiten Steuerungsmodus auf, bei dem durch Drücken des Bedienelementes die zur Durchführung der Schneidbewegung vorgesehene erste Antriebseinrichtung eine permanente Schneidbewegung mit jeweils konstanter Geschwindigkeit und Amplitude und somit eine entsprechende Dauerschneidfunktion durchführt. Zu diesem Zwecke sind bei diesem bekannten Mikrotom ein Tastenfeld, ein Drehregler und Schalter vorgesehen. Das Tastenfeld dient zur numerischen Eingabe, der Drehregler für kontinuierlich veränderbare Eingaben und die Schalter zur Eingabe bestimmter Schaltstellungen und Betriebszustände. Bei diesem bekannten Mikrotom ist also sowohl ein Handrad als auch ein Bedienpult mit einer Vielzahl Tasten und Schalter, d.h. Bedienelementen vorhanden, so daß der Bedienkomfort gravierende Mängel aufweist. Außerdem besitzen die Schalter bei diesem Mikrotom keine Regelfunktion. Die Regelfunktion wird erst durch den zusätzlichen Drehregler erreicht. Dort sind also zusätzlich zum Handrad noch drei verschiedene Tasten bzw. Schalter, d.h. Bedienelementgruppen, notwendig, was sich auf den Bedienkomfort entsprechend nachteilig auswirkt. Die Konzeption dieses bekannten Mikrotoms entspricht folglich der altbekannter Konfigurationen mit einem Handrad für eine manuelle Bedienung, mit Start/Stop-Tasten für die motorische Funktion und einem weiteren Regelknopf für die Geschwindigkeitsregelung. Aus der US-A-4479402 ist ein ähnliches Mikrotom bekannt, wobei die Start/Stop-Tasten im Handrad sind.

Aus der DE 199 11 005 A1 ist ein Verfahren zur Steuerung eines Scheibenmikrotoms bekannt, bei dem motorisch verstellbare Parameter über eine Steuerschaltung eingestellt werden. Dabei werden vorgegebene Soll-Werte für die motorisch verstellbaren Parameter laufend mit ermittelten Ist-Werten der motorisch verstellbaren Parameter verglichen. Aus der Differenz zwischen den Soll-Werten und den Ist-Werten werden Steuerungssignale zur Ansteuerung der motorisch verstellbaren Parameter gebildet. An die Steuerschaltung ist über eine Steuerleitung ein externes Bedienpult und über eine zweite Steuerleitung ist ein Handrad mit einem zugehörigen Encoder angeschlossen. Auch bei diesem bekannten Mikrotom ist also sowohl ein Handrad als auch ein Bedienpult vorhanden, so daß der Bedienkomfort ähnlich wie der Bedienkomfort des oben abgehandelten Mikrotoms gemäß der DE 199 11 163 C1 Wünsche offen läßt. Ähnliches gilt auch für das aus der DE 31 27 266 A1 bekannte Mikrotom, das ein Bedien- und Steuergerät aufweist, das mit einem Antrieb und einem Mikroprozessor verbunden ist. Mit Hilfe des Mikroprozessors und des Bedien- und Steuergerätes kann die Umdrehungsgeschwindigkeit der Antriebswelle des Antriebes beeinflußt werden. An einem Vorschubgetriebe dieses Mikrotoms ist eine Vorschubwahl zur Einstellung der gewünschten Schneidbereichslänge vorgesehen. Die Einstellung erfolgt über ein Handrad. Je nach der Einstellung des Handrades wird pro Umdrehung der Antriebswelle ein kleinerer oder größerer Vorschub des Präparatarms bewirkt. Auch bei diesem bekannten Mikrotom ist also sowohl ein Bediengerät als auch ein Handrad vorhanden, so daß der Bedienkomfort - wie bei den oben abgehandelten Mikrotomen - noch Wünsche offen läßt.

Der Erfindung liegt die Aufgabe zugrunde, ein Mikrotom der eingangs genannten Art mit verbessertem Bedienkomfort zu schaffen.

In einer ersten Ausführungsform wird diese Aufgabe bei einem Mikrotom der eingangs genannten Art erfindungsgemäß durch die Merkmale des Anspruchs 1 gelöst. Der ersten Antriebseinrichtung ist ein erstes Bedienelement zugeordnet , das mit einer Steuerungselektronik der ersten Antriebseinrichtung zusammengeschaltet ist, wobei die Steuerung der ersten Antriebseinrichtung über die Steuerungselektronik mittels dieses ersten Bedienelementes erfolgt, das zwei Steuerungsmodi aufweist, nämlich einen Standardmodus, bei dem durch entsprechendes Drehen des Bedienelementes eine der Drehung des Bedienelementes in Geschwindigkeit und Amplitude entsprechende Schneidbewegung der Objekthalteeinrichtung gesteuert wird, und einen zweiten Modus, bei dem durch seitliches Drücken des Bedienelementes die erste Antriebseinrichtung eine permanente Schneidbewegung mit jeweils konstanter Geschwindigkeit und Amplitude der Objekthalteeinrichtung und somit eine entsprechende Dauerschneidfunktion durchführt.

Während das eingangs erwähnte Mikrotom HM 350 S nur zur Durchführung des genannten Standardmodus geeignet ist, ist das erfindungsgemäße Mikrotom außerdem durch Drücken des Bedienelementes zur Durchführung einer Dauer-Schneidfunktion geeignet, wobei mit einer sogenannten Einknopfsteuerung der Bedienkomfort des Mikrotoms verbessert ist.

Bei dem erfindungsgemäßen Mikrotom entspricht die Geschwindigkeit der Schneidbewegung der Objekthalteeinrichtung in vorteilhafter Weise der Drehgeschwindigkeit des Bedienelementes in seinem Standardmodus. Erfindungsgemäß kann die Objekthalteeinrichtung zur Durchführung einer linear oszillierenden Schneidbewegung, d.h. einer linear oszillierenden Auf- und Abwärtsbewegung, vorgesehen sein. Desgleichen ist es jedoch möglich, daß die Objekthalteeinrichtung eine Schneidbewegung entlang einer Kreisbahn durchführt.

Die Amplitude der oszillierenden Schneidbewegung der Objekthalteeinrichtung entspricht der Amplitude der Drehbewegung des ersten Bedienelementes in seinem Standardmodus.

Unter dem Gesichtspunkt einer ausgezeichneten Betriebszuverlässigkeit und Betriebssicherheit ist es bevorzugt, wenn bei dem erfindungsgemäßen Mikrotom das erste Bedienelement in seinem zweiten Modus auch zur Aktivierung einer Bremswirkung der ersten Antriebseinrichtung geeignet ist. Die erste Antriebseinrichtung ist vorzugsweise von einem DC-Motor (Gleichstrommotor) gebildet.

Erfindungsgemäß ist es auch möglich, daß die Steuerung der ersten Antriebseinrichtung über eine Steuerungselektronik mittels eines ersten Bedienelementes erfolgt, das eine Drückschaltfunkrion und eine Drehschaltfunktion aufweist, wobei das erste Bedienelement mit seiner Drückschaltfunktion den Start und den Stop und mit seiner Drehschaltfunktion die Geschwindigkeit der linear oszillierenden Schneidbewegung der Objekthalterung über die erste Antriebseinrichtung steuert.

Bei einer solchen erfindungsgemäßen Ausbildung des Mikrotoms kann der Standardmodus wie bei einem bekannten Mikrotom z.B. mittels eines manuell zu betätigenden Kurbelantriebes, mittels eines Handrades, o.dgl. ausgeführt werden.

In der Ausführungsform nach Anspruch 7 ist der zweiten Antriebseinrichtung ein zweites Bedienelement zugeordnet, das mit einer Steuerungselektronik der zweiten Antriebseinrichtung zusammengeschaltet ist, wobei die Steuerung der zweiten Antriebseinrichtung mittels dieses zweiten Bedienelementes erfolgt, das zwei Steuerungsmodi aufweist, nämlich einen Drehmodus und einen Drückmodus. Die Steuerungselektronik der der Objekthalteeinrichtung zugeordneten ersten Antriebseinrichtung und die Steuerungselektronik der der Messerhalteeinrichtung bzw. der Objekthalteeinrichtung zugeordneten zweiten Antriebseinrichtung können von einer gemeinsamen Steuerungselektronik gebildet sein.

Bevorzugt ist es, wenn die/jede Steuerungselektronik eine CPU aufweist, die mit der ersten und/oder zweiten Antriebseinrichtung und mit dem zugehörigen ersten und/oder zweiten Bedienelement zusammengeschaltet ist. Das erste und das zweite Bedienelement können jeweils einen Drehwiderstand und einen Druckschalter aufweisen. Im jeweiligen Drehmodus dient das entsprechende Bedienelement zur Betätigung des zugehörigen Drehwiderstandes und im Drückmodus zur Betätigung des jeweiligen Druckschalters. Alternativ kann beispielsweise das erst und/oder zweite Bedienelement aus einem Inkrementalgeber bestehen, der zusätzlich einen Druckschalter zur Umschaltung der Modi enthält. Die beiden Bedienelemente können auf einer Seite des Mikrotomgehäuses oder voneinander getrennt an zwei verschiedenen Seiten des Mikrotomgehäuses, beispielsweise auf der rechten und/oder linken Seite des Mikrotomgehäuses, vorgesehen sein.

Wie bei üblichen Rotationsmikrotomen kann erfindungsgemäß der Grobvorschub, ein Trimmvorschub und die Feinschnittdicke durch eine entsprechende Bewegung der Objekthalteeinrichtung erfolgen. Desgleichen ist es jedoch möglich, daß der entsprechende Vorschub nicht über die Objekthalteeinrichtung sondern über die Messerhalteeinrichtung erfolgt. Das heißt, das erfindungsgemäße Prinzip der Steuerungstechnik mittels Antriebseinrichtung und zugehörigem, zwei Steuerungsmodi aufweisenden Bedienelement ist sowohl auf eine Bewegung der Objekthalteeinrichtung als auch auf eine Bewegung der Messerhalteeinrichtung anwendbar. Entsprechendes gilt für eine oszillierende Bewegung der Objekthalteeinrichtung als auch für eine Bewegung der Objekthalteeinrichtung entlang einer Kreisbahn.

Bei dem erfindungsgemäßen Mikrotom kann die zweite Antriebseinrichtung zum schrittweisen und/oder kontinuierlichen Bewegen der Objekthalteeinrichtung oder der Messerhalteeinrichtung vorgesehen sein, um eine entsprechende Grobzustellung, Trimmzustellung oder Feinschnittzustellung zu bewirken. Die zweite Antriebseinrichtung ist vorzugsweise von einem Schrittmotor gebildet.

Die horizontal hin- und hergehende Bewegung, d.h. die horizontale Objektzustellung, erfolgt bei einem erfindungsgemäßen Mikrotom nach Art eines an sich bekannten Rotationsmikrotoms beispielsweise mittels einer Schraubspindel/Spindelmutter-Konfiguration, die mit Hilfe des erwähnten Schrittmotors antreibbar ist. Die Steuerung des Schrittmotors erfolgt über das zugehörige zweite Bedienelement und die CPU. Durch Drehen des beispielsweise als Drehknopf ausgebildeten zweiten Bedienelementes in die eine Drehrichtung - aus einer definierten Null-Position heraus - erfolgt eine entsprechende Vorwärtsbewegung der Objekthalteeinrichtung bzw. des Objektkopfes der Objekthalteeinrichtung. Die Geschwindigkeit dieser Vorwärtsbewegung ist umso größer je weiter der Drehknopf in die gleiche Drehrichtung gedreht wird. Die Geschwindigkeit der Vorwärtsbewegung nimmt ab, wenn der Drehknopf in die entgegengesetzte Richtung gedreht wird. Bei Erreichen der definierten Null-Position wird die horizontale Bewegung der Objekthalteeinrichtung gestoppt. Wird der Drehknopf, d.h. das zweite Bedienelement in die entgegengesetzte Drehrichtung gedreht, so ergibt sich ein entsprechender Bewegungsablauf in der Rückwärtsbewegung der Objekthalteeinrichtung bzw. des Objektkopfes derselben.

Durch ein kurzes Drücken des zweiten Bedienelementes in der Null-Position wird mittels der CPU eine Pulsfunktion aktiviert, bei welcher ein horizontaler Vorschub der Objekthalteeinrichtung um den vorgewählten µm-Wert erfolgt, der jeweils über die Schnittdickenvorwahl als Trimmzustellung oder als Schnittdicken-Feinzustellung ausgewählt worden ist. Der Vorschub der Objekthalteeinrichtung erfolgt in diesem Modus ohne daß eine vertikale Auf- und Abwärtsbewegung der Objekthalteeinrichtung ausgeführt werden muß.

Mit einem solchen erfindungsgemäßen Mikrotom der zuletzt genannten Art mit einem ersten Bedienelement zur Steuerung der vertikalen Auf- und Abwärtsbewegung der Objekthalteeinrichtung und mit einem zweiten Bedienelement zur Steuerung der horizontalen Hin- und Herbewegung der Objekthalteeinrichtung mit zugehöriger CPU ergibt sich der Vorteil, daß beispielsweise von neun Bedientasten bzw. -elementen acht Bedientasten bzw. -elemente am Bedienpult eines herkömmlichen Mikrotomes ersetzt werden, nämlich
- die Bedientaste zur Geschwindigkeitsvorwahl des Grobvorschubes,
- die Bedientaste zum Schnittvorschub vorwärts,
- die Bedientaste zum Schnittvorschub rückwärts,
- die Pulstaste für die Trimm- und Feinzustellung,
- die Bedientaste für die Start-/Stop-Funktion,
- die Bedientaste Enable/Start,
- die Bedientaste für die Bremsfunktion,
- der Geschwindigkeitsregler für die Schneidebewegung,
- sowie zusätzlich noch das konventionelle mechanische Handrad, bei den üblichen Mikrotomen.

In diesem Zusammenhang ist zu erwähnen, daß medizinisch-technische Assistenten und -assistentinnen eine Anzahl Bedientasten, welche die entsprechenden Bewegungsabläufe auslösen bzw. steuern, nur sehr widerwillig annehmen und als wenig ergonomisch bezeichnen. Insbesondere bei der Bedienung von Kryostat-Rotationsmikrotomen führen die relativ weit von der Betätigungsebene entfernten Bedientasten häufig zu Fehlbedienungen. Solche Fehlbedienungen werden bei dem erfindungsgemäßen Mikrotom mit Einknopf-Steuerung, d.h. mit dem wenigstens einen Bedienelement oder bei einer besonders vorteilhaften Ausbildung mit den beiden Bedienelementen, vermieden.

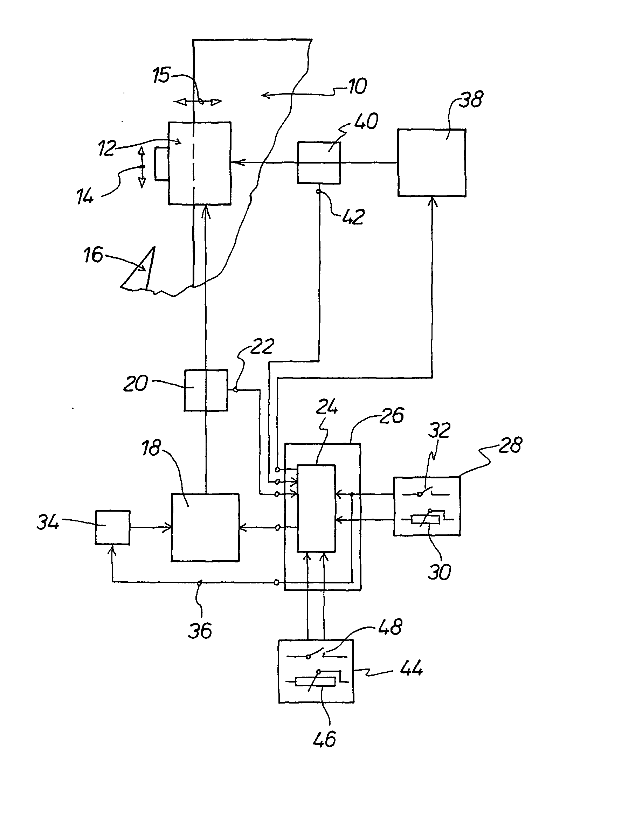

Weitere Einzelheiten, Vorteile und Merkmale ergeben sich aus der nachfolgenden Beschreibung eines in der Zeichnung äußerst schematisch angedeuteten Ausführungsbeispieles eines erfindungsgemäßen Mikrotoms nach Art eines Rotationsmikrotomes, wobei es sich - wie ausgeführt worden ist - versteht, daß erfindungsgemäß die Objekthalteeinrichtung oder die Messerhalteeinrichtung die entsprechende Zustellbewegung zum Grobschneiden, zum Trimmen und zum Feinschneiden durchführen kann, bzw. die Erfindung nicht auf Rotationsmikrotome beschränkt ist.

Die Figur zeigt abschnittweise schematisch ein Grundgestell 10 des Mikrotoms. Am Grundgestell 10 ist eine Objekthalteeinrichtung 12 vertikal auf- und abwärts und horizontal hin- und hergehend beweglich angeordnet. Bei dem Mikrotom handelt es sich um ein Rotationsmikrotom mit einer Objekthalteeinrichtung 12, die zur Durchführung einer vertikalen Auf- und Abwärtsbewegung geeignet ist. Diese Bewegung ist durch den Doppelpfeil 14 angedeutet. Das Mikrotom ist außerdem zur Durchführung einer horizontal hin- und hergehenden Bewegung geeignet, die durch den Doppelpfeil 15 angedeutet ist. Mit der Bezugsziffer 16 ist ein Schneidelement des Mikrotoms bezeichnet und abschnittweise schematisch verdeutlicht. Bei diesem Schneidelement 16 handelt es sich um ein Schneidmesser oder um einem Messerhalter mit einer Schneidklinge.

Die Objekthalteeinrichtung 12 ist zur Durchführung der durch den Doppelpfeil 14 angedeuteten, vertikalen, oszillierenden Auf- und Abwärtsbewegung mit einem Elektromotor 18 verbunden, bei dem es sich um einen DC-Motor handelt. Die Drehbewegung des Elektromotors 18 zum Antrieb der Objekthalteeinrichtung 12 wird von einem Geber 20 aufgenommen. Der Geber ist ein an sich bekannter Sensor zum Erfassen einer Drehbewegung, der einen Signalausgang 22 aufweist. Mit Hilfe des Gebers 20 werden am Signalausgang 22 bei der Drehung des Elektromotors 18 Signale generiert. Der Signalausgang 22 ist mit einer CPU 24 einer Steuerungselektronik 26 zusammengeschaltet. Die CPU 24 der Steuerungselektronik 26 dient auch zur Auswertung der Signale des Gebers 20, um eine Bestimmung der Drehrichtung und der Drehgeschwindigkeit des Elektromotors 18 zu bewirken.

Die Signale des Gebers 20 werden also direkt auf die CPU 24 geführt. Die Steuerungselektronik 26 weist außer der CPU weitere Module auf. In gleichmäßigen Zeitabständen wird die entsprechende Information des Gebers 20 von der CPU 24 abgeholt und in entsprechende Drehrichtungs- und Drehgeschwindigkeits-Informationen umgewandelt. Diese Informationen dienen dann als Sollwerte für einen Geschwindigkeitsregler des Elektromotors 18. Die Berechnung der Geschwindigkeit-Sollwerte findet in der Software der CPU 24 der Steuerungselektronik 26 statt, so daß zwischen dem Elektromotor 18 und der Objekthalteeinrichtung 12 gleichsam ein elektronisches Getriebe realisiert wird. Die Drehzahl des Elektromotors 18 kann also als Funktion der Geschwindigkeit eines mit der CPU 24 der Elektronikeinrichtung 26 wirkverbundenen Bedienelementes 28 definiert werden. Der mit Hilfe der CPU 24 berechnete Sollwert für den Geschwindigkeitsregler wird in ein Steuersignal einer Leistungsstufe umgesetzt, die die elektrische Energie für den Elektromotor 18 generiert.

Das Bedienelement 28 ist zwischen zwei Steuerungsmodi, nämlich einem an sich bekannten Standardmodus und einem zweiten Modus, verstellbar. Im ersten, d.h. im Standardmodus des Bedienelementes 28 wird eine Drehbewegung des Bedienelementes 28 in eine entsprechende Auf- und Abwärtsbewegung der Objekthalteeinrichtung 12 umgesetzt. Das gilt sowohl für die Geschwindigkeit der Auf- und Abwärtsbewegung der Objekthalteeinrichtung 12 entsprechend der Drehgeschwindigkeit des Bedienelementes 28 als auch für die Amplitude der Auf- und Abwärtsbewegung der Objekthalteeinrichtung 12 entsprechend der Amplitude der Drehbewegung des Bedienelementes 28 im besagten Standardmodus. Der zweite Modus wird durch Drücken des Bedienelementes 28 aktiviert. In diesem zweiten Modus führt der Elektromotor 18 eine permanente Auf- und Abwärtsbewegung, d.h eine Dauer-Schneidfunktion der Objekthalteeinrichtung 12 durch.

Das Bedienelement 28 kann zu diesem Zwecke beispielsweise einen Drehwiderstand 30 und einen Druckschalter 32 aufweisen, die in der Figur - wie der Elektromotor 18, Geber 20, die CPU 24 und die Steuerungselektronik 26 sowie das Bedienelement 28 - nur schematisch verdeutlicht sind.

Der Elektromotor 18 ist mit einer Motorbremse 34 wirkverbunden, die ebenfalls nur schematisch durch einen Block verdeutlicht ist. Im zweiten Modus ist das Bedienelement 28 auch zur Aktivierung der Motorbremse 34 des Elektromotors 18 geeignet. Das ist durch den abgewinkelten Pfeil 36 schematisch angedeutet.

Bei dem erfindungsgemäßen Mikrotom, insbesondere Rotationsmikrotom, weist das Bedienelement 28 also eine Doppelfunktion auf. Im Standardmodus wird die Auf- und Abwärtsbewegung der Objekthalteeinrichtung 12 bezüglich ihrer Geschwindigkeit und Amplitude durch entsprechendes Vor- und Zurückdrehen des beispielsweise als Drehknopf ausgebildeten Bedienelementes 28 gesteuert. Im zweiten Modus, der beispielsweise durch ein seitliches Drücken des Drehknopfes aktiviert wird, wird der Elektromotor 18 permanent aktiviert, so daß die Objekthalteeinrichtung 12 in diesem zweiten Modus eine permanente Auf- und Abwärtsbewegung, d.h. eine Dauerschneidfunktion, ausführt. Dabei kann durch Verdrehen des Drehknopfes im Uhrzeigersinn oder im entgegengesetzten Uhrzeigersinn die Schneidgeschwindigkeit der Dauer-Schneidfunktion geregelt werden. Der Regelungsbereich beginnt z.B. bei einem seitlichen Drücken des Drehknopfes bei Null und reicht bis zu einer definierten maximalen Geschwindigkeit. Bei einem nochmaligen Drücken des Drehknopfes wird der Schneidezyklus sinnvollerweise im oberen Umkehrpunkt der Objekthalteeinrichtung 12 beendet und die Motorbremse 34 aktiviert. Durch einfaches Drehen des Drehknopfes 28, ohne denselben zu drücken, kann die Motorbremse 34 wieder gelöst und der manuelle Modus eingeleitet bzw. durchgeführt werden.

Eine Schneidegeschwindigkeitsregelung kann bei dem erfindungsgemäßen Mikrotom in zwei Programmen, d.h. in einem Programm I und in einem Programm II vorgenommen werden:

Bei dem Programm I beginnt die Regelungsgeschwindigkeit durch Drücken des Drehknopfes bei Null und geht durch Verdrehen des Drehknopfes bis zu einer maximalen Geschwindigkeit und durch ein Drehen im entgegengesetzten Drehsinn wieder zurück bis Null.

Bei dem Programm II beginnt die Regelungsgeschwindigkeit durch Drücken des Drehknopfes bei einer mittleren Schneidegeschwindigkeit, die frei programmiert werden kann. Die Regelungsgeschwindigkeit kann danach durch gezieltes Drehen des Drehknopfes auf jede beliebige Geschwindigkeit eingestellt werden.

Bei wiederholtem Drücken des Drehknopfes bzw. Bedienelementes 28 kann in beiden oben genannten Programmen der Schneidezyklus im oberen Umkehrpunkt der Objekthalteeinrichtung 12 gestoppt und die Motorbremse 34 aktiviert werden.

Durch eine entsprechende Programmierung kann der Stop der vertikalen Schneidebewegung bei wiederholtem Drücken des Bedienelementes 28 an jeden x-beliebigen Punkt erfolgen und die Motorbremse 34 aktiviert werden.

Mit Hilfe des Bedienelementes 28 werden also mit einer sogenannten Einknopfsteuerung alle möglichen vertikalen Bewegungsabläufe eines manuellen Handradantriebes der Objekthalteeinrichtung 12 bekannter Mikrotome auf logische Weise und ohne körperliche Anstrengung automatisiert. Die erfindungsgemäße Einknopfsteuerung vereinigt im Vergleich mit bekannten motorisierten Mikrotomen die folgenden Funktionen:
- Ein-Aus-automatischer Objekthub;
- Bremse;
- Auf-Ab der Objekthalteeinrichtung manuell; und
- Geschwindigkeitsregelung der Objekthalteeinrichtung.

Die Objekthalteeinrichtung 12 ist außerdem auch zur Durchführung einer horizontal hin- und hergehenden Bewegung, die durch den Doppelpfeil 15 angedeutet ist, mit einem Elektromotor 38 verbunden, bei dem es sich z.B. um einen Schrittmotor handelt.

Der Elektromotor 38 ist über die CPU 24 der Steuerungselektronik 26 mit einem zugehörigen zweiten Bedienelement 44 zusammengeschaltet. Das zweite Bedienelement 44 weist wie das erste Bedienelement 28 zwei Modi, nämlich einen Drehmodus und einen Drückmodus auf. Der Drehmodus des zweiten Bedienelementes 44 ist durch einen Drehwiderstand 46 und der Drückmodus des zweiten Bedienelementes 44 ist durch das Symbol eines Druckschalters 48 angedeutet. Durch Drehen des zweiten Bedienelementes 44 in eine Drehrichtung - aus einer definierten Null-Position heraus - erfolgt, wie bereits ausgeführt worden ist, eine entsprechende horizontale Vorwärtsbewegung der Objekthalteeinrichtung 12. Die Geschwindigkeit dieser Vorwärtsbewegung ist zum jeweiligen Drehwinkel des zweiten Bedienelementes 44 proportional, d.h. die Geschwindigkeit der Vorwärtsbewegung ist umso größer, je mehr das zweite Bedienelement 44 in die gleiche Drehrichtung weitergedreht wird. Die Geschwindigkeit der Vorwärtsbewegung der Objekthalteeinrichtung 12 nimmt ab, wenn das zweite Bedienelement 44 in die entgegengesetzte Drehrichtung gedreht wird. Bei Erreichen der definierten Null-Position der Objekthalteeinrichtung 12 wird die horizontale Bewegung der Objekthalteeinrichtung 12 gestoppt. Wird das Bedienelement 44 in die entgegengesetzte Drehrichtung gedreht, so erfolgt der entsprechende Bewegungsablauf der Objekthalteeinrichtung 12 zur Vorwärtsbewegung entgegengesetzt, d.h. in der Rückwärtsbewegung. Wird das zweite Bedienelement 44 in der Null-Position der Objekthalteeinrichtung 12 gedrückt, so wird eine Pulsfunktion aktiviert, in der ein horizontaler Vorschub der Objekthalteeinrichtung 12 um den jeweils eingestellten µm-Wert erfolgt, der mittels der Schnittdickenvorwahl des Mikrotoms als Trimmzustellung oder als Feinschnittzustellung vorgewählt worden ist. Die Vorschubbewegung der Objekthalteeinrichtung 12 erfolgt in diesem Modus ohne daß eine vertikale Bewegung der Objekthalteeinrichtung 12 in Richtung des Doppelpfeiles 14 durchgeführt wird.

Das erste Bedienelement 28 und das zweite Bedienelement 44 können an ein und derselben Seite des Mikrotomgehäuses oder auf zwei voneinander verschiedenen, d.h. beispielsweise auf voneinander abgewandten Seiten des Mikrotomgehäuses lokalisiert sein.

Das erfindungsgemäße Mikrotom weist neben den Vorteilen einer erheblichen Kostenreduktion und einer einfachsten Bedienbarkeit den ganz erheblichen Vorteil einer optimalen Ergonometrie auf, so daß die bekannten bedienungsbedingten Erkrankungen wie das Carpel-Tunnel-Syndrom und Repetitive-Motion-Deceases ganz wesentlich reduziert bzw. eliminiert sind.

## Patentansprüche

1. Mikrotom mit einer Messerhalteeinrichtung für ein Schneidelement (16) und mit einer Objekthalteeinrichtung (12), wobei die Objekthalteeinrichtung (12) zur Durchführung einer Schneidbewegung eine erste Antriebseinrichtung (18) und die Objekthalteeinrichtung (12) bzw. die Messerhalteeinrichtung zur Durchführung einer Zustellbewegung eine zweite Antriebseinrichtung (38) ausweist, wobei der ersten Antriebseinrichtung (18) ein erstes Bedienelement (28) zugeordnet ist, das mit einer Steuerungselektronik (26) der ersten Antriebseinrichtung (18) zusammengeschaltet ist, wobei die Steuerung der ersten Antriebseinrichtung (18) über die Steuerungselektronik (26) mittels des ersten Bedienelementes (28) erfolgt,
**dadurch gekennzeichnet,**
**dass** das erste Bedienelement (28) zwei Steuerungsmodi aufweist, nämlich einen Standardmodus, bei dem durch entsprechendes Drehen des Bedienelementes (28) eine der Drehung des Bedienelementes (28) entsprechende Schneidbewegung der Objekthalteeinrichtung (12) gesteuert wird, und einen zweiten Modus, bei dem durch Drücken des Bedienelementes (28) die erste Antriebseinrichtung (18) eine permanente Schneidbewegung mit jeweils konstanter Geschwindigkeit und Amplitude der Objekthalteeinrichtung (12) und somit eine entsprechende Dauerschneidfunktion durchfühlt, und das erste Bedienelement (28) in seiner Drückschaltfunktion den Start und Stop und in seiner Drehschaltfunktion die Geschwindigkeit der linear oszillierenden Schneidbewegung der Objekthalterung (12) über die erste Antriebseinrichtung (18) steuert.

2. Mikrotom nach Anspruch 1,
**dadurch gekennzeichnet, dass** die Geschwindigkeit der Schneidbewegung der Objekthalteeinrichtung (12) der Drehgeschwindigkeit des ersten Bedienelementes (28) in seinem Standardmodus entspricht.

3. Mikrotom nach Anspruch 1 oder 2,
**dadurch gekennzeichnet,**
**dass** die Objekthalteeinrichtung (12) zur Durchführung einer linear oszillierenden Schneidbewegung vorgesehen ist.

4. Mikrotom nach Anspruch 3,
**dadurch gekennzeichnet,**
**dass** die Amplitude der oszillierenden Schneidbewegung der Objekthalteeinrichtung (12) der Amplitude der Drehbewegung des ersten Bedienelementes (28) in seinem Standardmodus entspricht.

5. Mikrotom nach einem der Ansprüche 1 bis 4,
**dadurch gekennzeichnet,**
**dass** das erste Bedienelement (28) in seinem zweiten Modus zur Aktivierung einer Motorbremse (34) der ersten Antriebseinrichtung (18) geeignet ist.

6. Mikrotom nach einem der Ansprüche 1 bis 5,
**dadurch gekennzeichnet,**
**dass** die erste Antriebseinrichtung ein DC-Motor ist.

7. Mikrotom mit einer Messerhalteeinrichtung für ein Schneidelement (16) und mit einer Objekthalteeinrichtung (12), wobei die Objekthalteeinrichtung (12) zur Durchführung einer Schneidbewegung eine erste Antriebseinrichtung (18) und die Objekthalteeinrichtung (12) bzw. die Messerhalteeinrichtung zur Durchführung einer Zustellbewegung eine zweite Antriebseinrichtung (38) aufweist,
**dadurch gekennzeichnet,**
**dass** der zweiten Antriebseinrichtung (38) eine Steuerungselektronik (26) zugeordnet ist, wobei die Steuerung der zweiten Antriebseinrichtung (38) mittels eines zweiten Bedienelementes (44) erfolgt, das zwei Steuerungsmodi, nämlich einen die Vorschubrichtung und/oder die Vorschubgeschwindigkeit der Objekthalteeinrichtung (12) oder der Messerhalteeinrichtung steuernden Drehmodus und einen eine schrittweise Vorschubbewegung der Objekthalteeinrichtung (12) oder der Messerhalteeinrichtung steuernden Druckmodus aufweist, und dass die zweite Antriebseinrichtung (38) zum schrittweisen und/oder kontinuierlichen Bewegen der Objekthalteeinrichtung (12) oder der Messerhalteeinrichtung vorgesehen ist.

8. Mikrotom nach Anspruch 7,
**dadurch gekennzeichnet,**
**dass** die Steuerungselektronik (26) der ersten Antriebseinrichtung (18) und die Steuerungselektronik (26) der zweiten Antriebseinrichtung (38) von einer gemeinsamen Steuerungselektronik (26) gebildet sind.

9. Mikrotom nach einem der Ansprüche 1 bis 8,
**dadurch gekennzeichnet,**
**dass** die/jede Steuerungselektronik (26) eine CPU (24) aufweist, die mit der ersten und/oder zweiten Antriebseinrichtung (18, 38) und mit dem zugehörigen Bedienelement (28, 44) zusammengeschaltet ist.

10. Mikrotom nach einem der vorhergehenden Ansprüche,
**dadurch gekennzeichnet,**
**dass** die zweite Antriebseinrichtung (38) ein Schrittmotor ist.

## Claims

1. A microtome comprising a knife holding device for a cutting element (16) and a specimen holding device (12), wherein the specimen holding device (12) has a first drive device (18) for performing a cutting movement and the specimen holding device (12) or the knife holding device has a second drive device (38) for performing a feed movement, wherein associated with the first drive device (18) is a first operating element (28) which is connected together with an electronic control means (26) of the first drive device (18), wherein control of the first drive device (18) is effected by way of the electronic control means (26) by means of the first operating element (28), wherein the first operating element (28) has two control modes, namely a standard mode in which a cutting movement of the specimen holding device (12) corresponding to the rotary movement of the operating element (28) is controlled by corresponding rotation of the operating element (28), and a second mode in which by pressing the operating element (28) the first drive device (18) performs a permanent cutting movement at a respectively constant speed and amplitude of the specimen holding device (12) and thus a corresponding continuous cutting function, and the first operating element (28) in its push button function controls starting and stopping and in its rotary switch function the speed of the linearly oscillating cutting movement of the specimen holding device (12) by way of the first drive device (18).

2. A microtome as set forth in claim 1, wherein the speed of the cutting movement of the specimen holding device (12) corresponds to the rotary speed of the first operating element (28) in its standard mode.

3. A microtome as set forth in claim 1 or 2, wherein the specimen holding device (12) is provided for performing a linearly oscillating cutting movement.

4. A microtome as set forth in claim 3, wherein the amplitude of the oscillating cutting movement of the specimen holding device (12) corresponds to the amplitude of the rotary movement of the first operating element (28) in its standard mode.

5. A microtome as set forth in one of the claims 1 to 4, wherein, when in its second mode, the first operating element (28) is suitable for activation of a motor brake (34) of the first drive device (18).

6. A microtome as set forth in one of the claims 1 to 5, wherein the first drive device is a DC motor.

7. A microtome comprising a knife holding device for a cutting element (16) and a specimen holding device (12), wherein the specimen holding device (12) has a first drive device (18) for performing a cutting movement and the specimen holding device (12) or the knife holding device has a second drive device (38) for performing a feed movement, wherein an electronic control means (26) is associated with the second drive device (38), wherein control of the second drive device (38) is effected by means of a second operating element (44) which has two control modes, namely a rotary mode for controlling the advance direction and/or the advance speed of the specimen holding device (12) or the knife holding device and a pressing mode for controlling a stepwise advance movement of the specimen holding device (12) or the knife holding device, and the second drive device (38) is provided for stepwise and/or- continuous movement of the specimen holding device (12) or the knife holding device.

8. A microtome as set forth in claim 7, wherein the electronic control means (26) of the first drive device (18) and the electronic control means (26) of the second drive device (38) are formed by a common electronic control means (26).

9. A microtome as set forth in one of the claims 1 to 8 wherein the electronic control means (26) has a CPU (24) which is connected together with one of the first and second drive device (18, 38) and the associated operating element (28, 44).

10. A microtome as set forth in one of the preceding claims, wherein the second drive device (38) is a stepping motor.

## Revendications

1. Microtome avec un dispositif de guide-lame pour un élément de coupe (16) et avec un dispositif de support d'objet (12), sachant que le dispositif de support d'objet (12) présente un premier dispositif d'entraînement (18) afin d'exécuter un mouvement de coupe et le dispositif de support d'objet (12) ou le dispositif de guide-lame présente un deuxième dispositif d'entraînement (38) afin d'exécuter un mouvement d'avance, dans lequel au premier dispositif d'entraînement (18) est associé un premier élément de commande (28) qui est interconnecté à un dispositif de commande électronique (26) du premier dispositif d'entraînement (18), le premier dispositif d'entraînement (18) étant commandé par le dispositif de commande électronique (26) au moyen du premier élément de commande (28),
**caractérisé en ce que** le premier élément de commande (28) présente deux modes de commande, à savoir un mode standard, avec lequel au moyen de la rotation correspondante de l'élément de commande (28) est commandé un mouvement de coupe du dispositif de support d'objet (12) correspondant à la rotation de l'élément de commande (28), et un deuxième mode, avec lequel, au moyen d'une pression sur l'élément de commande (28), le premier dispositif d'entraînement (18) exécute un mouvement de coupe permanent avec à chaque fois une vitesse constante et une amplitude constante du dispositif de support d'objet (12) et ainsi une fonction de coupe permanente correspondante, et **en ce que** le premier élément de commande (28) commande dans sa fonction de commande de pression la marche et l'arrêt, et dans sa fonction de commande de rotation la vitesse du déplacement de coupe, oscillant de manière linéaire, du support d'objet (12) au moyen du premier dispositif d'entraînement (18).

2. Microtome selon la revendication 1, **caractérisé en ce que** la vitesse du mouvement de coupe du dispositif de support d'objet (12) correspond à la vitesse de rotation du premier élément de commande (28) dans son mode standard.

3. Microtome selon la revendication 1 ou 2, **caractérisé en ce que** le dispositif de support d'objet (12) est prévu pour exécuter un mouvement de coupe oscillant de manière linéaire.

4. Microtome selon la revendication 3, **caractérisé en ce que** l'amplitude du mouvement de coupe oscillant du dispositif de support d'objet (12) correspond à l'amplitude du mouvement de rotation du premier élément de commande (28) dans son mode standard.

5. Microtome selon l'une quelconque des revendications 1 à 4, **caractérisé en ce que** le premier élément de commande (28) est apte dans son deuxième mode à activer un frein moteur (34) du premier dispositif d'entraînement (18).

6. Microtome selon l'une quelconque des revendications 1 à 5, **caractérisé en ce que** le premier dispositif d'entraînement est un moteur continu.

7. Microtome avec un dispositif de guide-lame pour un élément de coupe (16) et avec un dispositif de support d'objet (12), dans lequel le dispositif de support d'objet (12) présente un premier dispositif d'entraînement (18) afin d'exécuter un mouvement de coupe et le dispositif de support d'objet (12) ou le dispositif de guide-lame présente un deuxième dispositif d'entraînement (38) afin d'exécuter un mouvement d'avance, **caractérisé en ce que**
un dispositif de commande électronique (26) est associé au deuxième dispositif d'entraînement (38), le deuxième dispositif d'entraînement (38) étant commandé au moyen d'un deuxième élément de commande (44) qui présente deux modes de commande, à savoir un mode de rotation commandant la direction d'avance et/ou la vitesse d'avance du dispositif de support d'objet (12) ou du dispositif de guide-lame, et un mode de pression commandant un avancement pas à pas du dispositif de support d'objet (12) ou du dispositif de guide-lame, et **en ce que** le deuxième dispositif d'entraînement (38) est prévu pour déplacer pas à pas et/ou continuellement le dispositif de support d'objet (12) ou le dispositif de guide-lame.

8. Microtome selon la revendication 7, **caractérisé en ce que** le dispositif de commande électronique (26) du premier dispositif d'entraînement (18) et le dispositif de commande électronique (26) du deuxième dispositif d'entraînement (38) sont formés par un dispositif de commande électronique (26) commun.

9. Microtome selon la revendication 1 à 8,
**caractérisé en ce que**,
le ou chaque dispositif de commande électronique (26) présente un processeur central (24) qui est interconnecté au premier et/ou au deuxième dispositif d'entraînement (18, 38) et à l'élément de commande associé (28, 44).

10. Microtome selon l'une quelconque des revendications précédentes, **caractérisé en ce que** le deuxième dispositif d'entraînement (38) est un moteur pas à pas.
